# EUROPEAN PATENT APPLICATION

(11) **EP 1 534 014 A2**
(43) Date of publication of application: **25.05.2005**
(21) Application number: 04256757.8
(22) Date of filing: 02.11.2004
(51) Int. Cl.: H04N 7/24

(54) **Method and apparatus for synopsizing program content during presentation**

(30) Priority: 03.11.2003 US 517161 P; 03.09.2004 US 934323
(71) Applicant: Ensequence, Inc., Portland, OR 97204 (US)
(72) Inventor: Wallace, Michael W. c/o Ensequence Inc., Portland, OR 97204 (US); Westerman, Larry A. c/o Ensequence Inc., Portland, OR 97204 (US)
(74) Representative: Moran, Paula

(57) **Abstract**

Methods and systems for providing synopsis information to a program recipient for a program currently being presented. Synopsis information is provided for a program currently being presented from a starting point of the program to at least a point of the program currently being presented. The synopsis information is received and decoded so that the synopsis information is provideable to the program recipient. The synopsis information is provided to the program recipient when the program recipient indicates the program recipient wishes to have the synopsis information provided.

## Description

### FIELD OF THE INVENTION

This invention relates generally to media presentation, and more particularly to the display of auxiliary text and image material in combination with an on-going video program presentation.

### BACKGROUND OF THE INVENTION

Media programs, such as television programs, are generally designed to be experienced from beginning to end, providing a linear story flow involving the traditional mechanisms of plot and character development. Complete comprehension and enjoyment of a program depends upon viewing the entire broadcast from beginning to end. However, often a viewer may tune into a program after some delay from the onset, so that critical elements of the plot or character development are missed.

At present, no method exists for dealing with this problem. Plot summaries are often contained in printed or electronic program guides, but these summaries are typically short and contain little or no detail as to the plot flow or character development. Additionally, printed summaries of plots of selected shows (most commonly daytime dramas or "soap operas") are printed in general circulation magazines, but this is done after the fact.

The only form of information generally provided with the video program is in the form of teletext which provides closed captioning versions of the spoken dialog and sound cues of the program. Of necessity, this closed caption material keeps pace with the show, and cannot provide a retrospective summary of the plot, dialog or character development of the story. Therefore, there exists a need to allow viewers the opportunity to review information about program content that they have missed.

### SUMMARY OF THE INVENTION

The present invention provides methods and systems for allowing viewers the opportunity to review information about programs content that they have missed. The synopsis information is provided for a program currently being presented from a starting point of the program to a point of the program currently being presented. The synopsis information is received and presented to the program recipient. The synopsis information is presented to the program recipient when the program recipient indicates a desire to receive it.

In accordance with further aspects of the invention, the synopsis information includes video and audio, one or more still images, and/or text.

In accordance with other aspects of the invention, the text is scrolling text having a speed that is manually or automatically set.

In accordance with still further aspects of the invention, the synopsis information is presented on a plurality of pages.

### BRIEF DESCRIPTION OF THE DRAWINGS

The preferred and alternative embodiments of the present invention are described in detail below with reference to the following drawings.

FIGURE 1 is a block diagram of an example broadcast system for implementing the present invention;

FIGURE 2 illustrates an example computer system for creating broadcast content;

FIGURE 3 illustrates a carousel data stream used to transmit broadcast content data to end users;

FIGURE 4 is a data stream that includes synopsis information formed in accordance with an embodiment of the present invention;

FIGURE 5 is an example of a user system for presenting broadcast content transmitted by the system shown in FIGURE 2;

FIGURE 6 is a flow diagram of an example method performed by the systems shown in FIGURES 1, 2, and 5; and

FIGURE 7-9 are screen shots of an example user interface that allows a viewer to access synopsis information.

### DETAILED DESCRIPTION OF THE INVENTION

By way of overview, embodiments of the present invention provide a method, computer-readable medium, and a system for providing synopsis information to a program recipient for a program currently being presented. Synopsis information is provided for a program currently being presented from a starting point of the program to a subsequent point within the program currently being presented. The synopsis information is received and decoded so that the synopsis information is presentable to the program recipient. The synopsis information is provided to the program recipient when the program recipient indicates the program recipient wishes to have the synopsis information presented.

Although embodiments of the invention are applicable to many types of audio, video, and/or audiovisual programs, this invention is highly applicable in the context of digital television broadcast, and so will be described within that context. In the digital broadcast environment, additional data can be sent with the video and audio content which contains a variety of elements including, for example, closed captioning information, text data for display, or binary data for interpretation and possible execution by software running on a digital receiver/decoder. This latter case is what is described here as the preferred embodiment.

The preferred form of the present invention provides a digital video broadcast stream that includes audio-video program content and an application to be executed within the digital receiver/decoder (typically a set-top box or "STB"). Software within the STB receives and interprets the broadcast data stream, recognizing that an application is to be run. The application includes textual and/or graphical information about the companion audio-video program content.

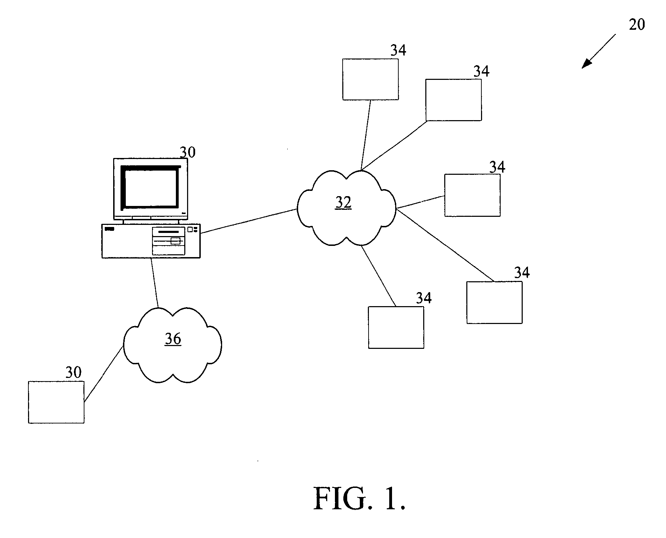

As shown in FIGURE 1, a broadcast environment 20 includes components that perform different aspects of the present invention. The broadcast environment 20 includes a broadcast computer system 30 that generates synopsis information, associates or combines the synopsis information with a broadcast program, and broadcasts the broadcast program and synopsis over a broadcast network 32 to user processor-based devices 34. The user processor-based devices 34 process the synopsis information and present synopses to the user upon request.

Operations performed by the broadcast computer system 30 may be distributed to other systems across a public or private data network 36. Distributed operations include broadcast program creation, synopsis information creation, broadcast program and synopsis information combining, or any other operations that are not location dependent.

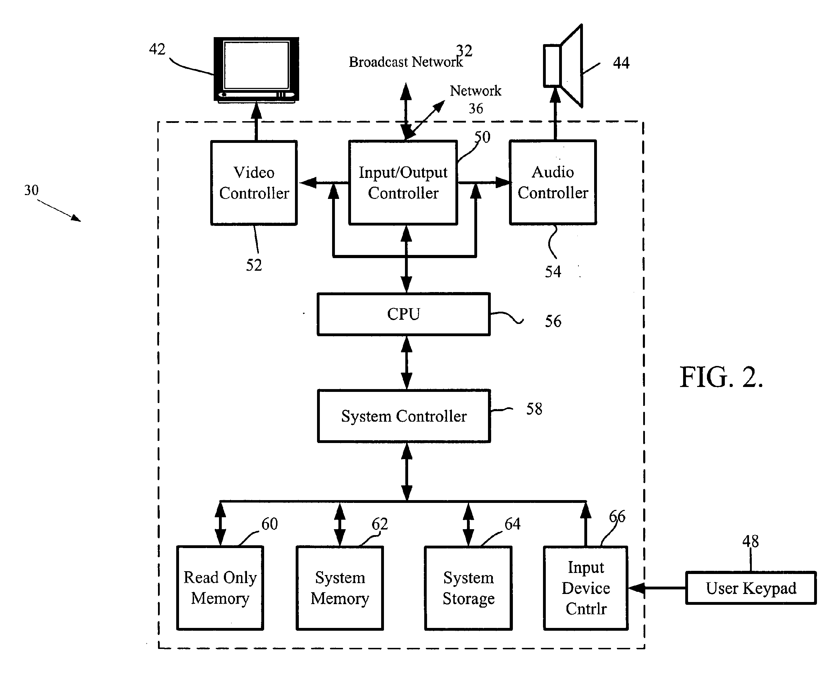

FIGURE 2 shows the broadcast computer system 30 configured as a data processing/media control transmission system. The system 30 is operable for controlling a display 42 and an audio subsystem 44, such as a stereo or a loudspeaker system. The system 30 transmits data through the broadcast network 32. The system 30 is controlled by user input from a wired or wireless user keypad 48.

The system 30 transmits through the broadcast network 32 via an input/output controller 50, which directs signals to and from a video controller 52, an audio controller 54, and a central processing unit ("CPU") 56. The input/output controller 50 is a multiplexer for routing video data blocks, audio data blocks, and other data blocks routed through and/or generated by the system 30 to the CPU 56 for processing and multiplexing. The CPU 56 communicates through a system controller 58 with input and storage devices such as read only memory ("ROM") 60, system memory 62, system storage 64, and input device controller 66. The system 30 generates and transmits data blocks through the broadcast network 32 to devices 34. The CPU 56 and associated components are operable to format and generate index files.

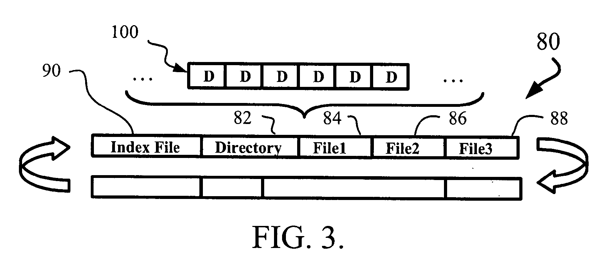

FIGURE 3 shows a data carousel 80 executed by the system 20 shown in FIGURE 1. The data carousel 80 includes recurringly transmitted data blocks 100 that include an index file 90, a directory 82 and three files, File 1 84, File 2 86, and File 3 88. The index file 90 may span multiple data blocks. Spanning may occur in other elements such as the directory 92 and File 1 84, File 2 86, and File 3 88. Just as with other elements, the index file 90 is recurringly transmitted.

The data blocks 100 are collected and buffered for use by the devices 34. Once the device 34 has been engaged and has buffered a set of the files 84, 86, and 88 that are listed in the directory 82 appropriate to current user selections, the device 34 will not load and buffer additional files until an index file 90 is received which indicates that contents of the index file and, therefore, other files in the data carousel 80, have changed. Other data transmission techniques may be used for transmitting the data of the present invention.

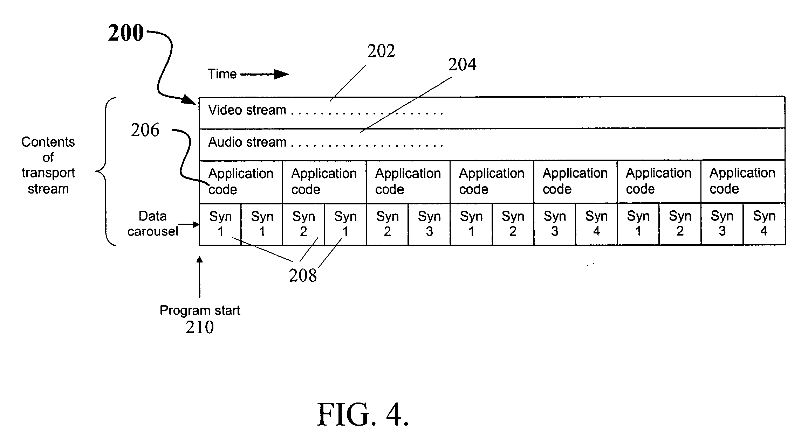

FIGURE 4 shows a broadcast transport stream 200 having application code 206 and data 208 (e.g., synopsis information) that may be sent in conjunction with the program content (video stream 202 and audio stream 204) in the transport steam 200. In one embodiment, the data and/or application code 206 is transmitted using the data carousel method described above and in co-pending patent application, "EFFICIENT METHOD AND SYSTEM FOR DELIVERING RESOURCES IN BROADCAST ENVIRONMENT," Application Serial No. 10/427,344, which is hereby incorporated by reference.

Each of the various pieces of data, including the application code 206, is repeatedly sent within the transport stream 200. This enables the hardware/software of the device 34 to read the transport stream 200 starting at any arbitrary time during the program content. The carousel permits viewers to change channels and still utilize applications included within the transport stream 200.

As shown in FIGURE 4, in the transport stream 200 the application code 206 is first broadcast at or prior to a start 210 of the program content (202, 204) with minimal ancillary synopsis data 208. At any time during the broadcast, the device 34 locates the beginning of the application code 206, reads the synopsis data 208 from the transport stream 200, and then initializes the application. The application in turn presents synopsis information to a user based on the synopsis data 208. The synopsis data 208 is broken down into smaller components. Each of the components (Syn 1, Syn 2, etc.) includes synopsis information pertaining to different portions of the program. For example, Syn 1 would cover the first 15 minutes of the program and Syn 2 would cover the next 15 minutes of the program. The data carousel repeats the transmission of Syn 1, but adds in more Syns depending upon when the transmission is received relative to the starting point of the program. So, if the user has missed 1 hour of the program, Syns 1-4 are transmitted (each provides 15 minutes of synopsis data).

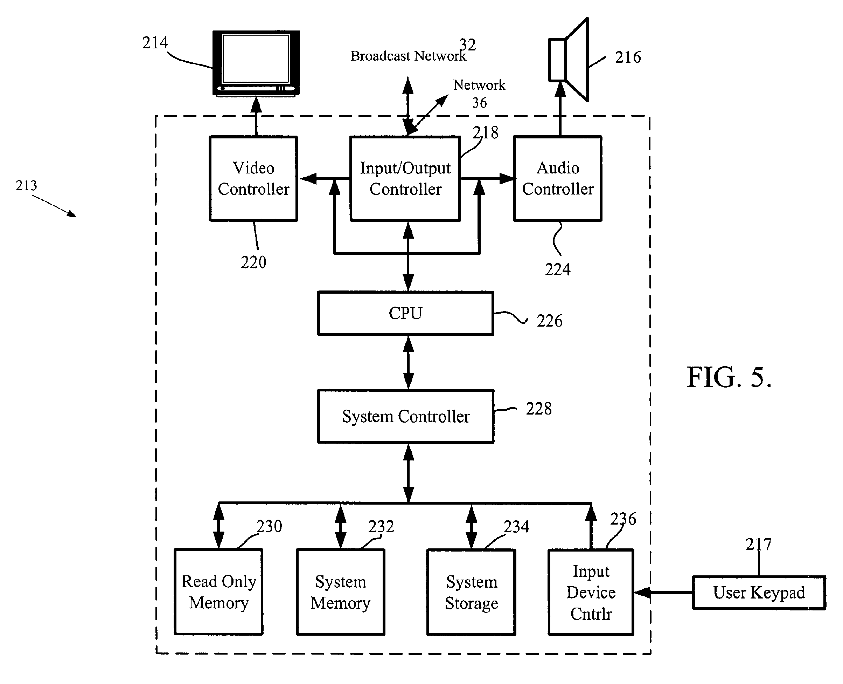

FIGURE 5 shows an example of the user processor-based device 34 as a data processing/media control reception system 213 operable for using embodiments of the present invention. The system 213 receives data from the broadcast network 32, such as a broadband digital cable network, digital satellite network, or other data network 36. As opposed to generating and multiplexing data, the system 213 receives audio, video, and data content from the network 32. The system 213 is a STB for controlling a display 214, such as a television, and an audio subsystem 216, such as a stereo or a loudspeaker system. The system 213 also receives user input from a wired or wireless user keypad 217, which may be in the nature of a STB remote.

The system 213 receives input from the network 32 via an input/output controller 218, which directs signals to and from a video controller 220, an audio controller 224, and a central processing unit (CPU) 226. In the case of a STB, the input/output controller 218 is a demultiplexer for routing video data blocks received from the network 32 to a video controller 220 in the nature of a video decoder, audio data blocks to an audio controller 224 in the nature of an audio decoder, and for routing other data blocks to a CPU 226 for processing. In turn, the CPU 226 communicates through a system controller 228 with input and storage devices such as ROM 230, system memory 232, system storage 234, and input device controller 236.

The system 213 thus can receive incoming data files of various kinds. The system 213 can react to the files by receiving and processing changed data files received from the network 32.

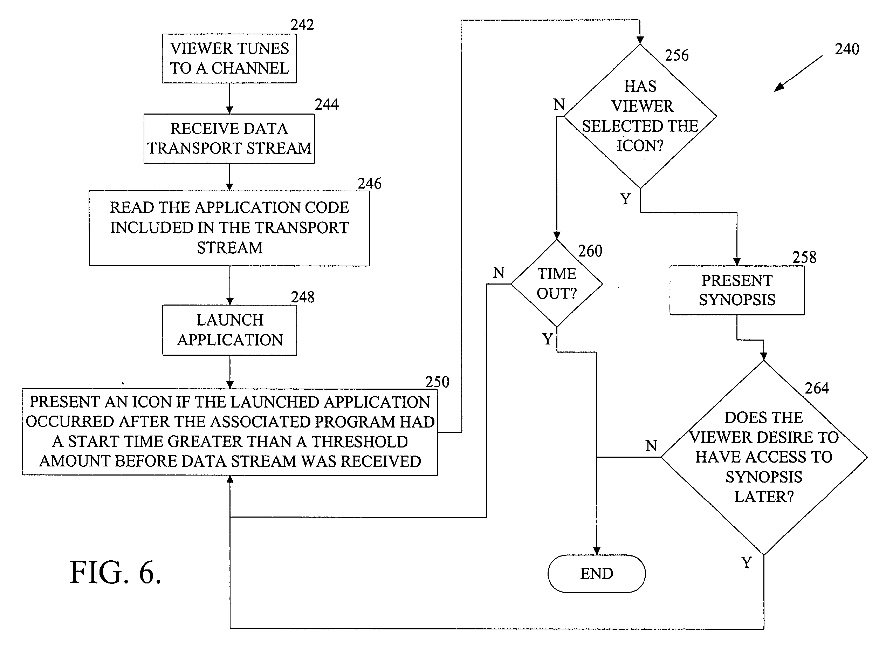

FIGURE 6 is a flowchart of a process 240 illustrating the operation of one presently preferred embodiment of the present invention. When a viewer tunes to a channel (block 242), the user device 34 receives a program in the form of the transport stream 200 (FIGURE 4) at a block 244. The application code 206 is read by the device 34 at a block 246. The application associated with the application code 206 is initialized or launched at a block 248. At a block 250, the application presents a small iconic symbol on the screen, which cues the viewer that a synopsis of the associated broadcast process 240 is available. Other methods for informing a user that synopsis information exist may be performed. For example, an indication of existing synopsis information may be presented on a remote control device associated and in data communication with the device 34. The indication may be an icon on a display of the remote control device or may be a special use light. If it is determined at a decision block 256 that the viewer selected the synopsis to be presented, then at a block 258, the synopsis information is presented for the associated broadcast. The synopsis information includes information about the associated program content from the beginning of the program to the current point. At a decision block 264, the device 34 determines if the viewer has selected an option to have access to the synopsis information at a later time. If the viewer does want access at a later time, the process 240 returns to the block 250. If the viewer does not select the application at the decision block 256, the device 34 determines at a decision block 260 whether the opportunity for the viewer to select the application has reached a predetermined "time out" period allotted for the user to respond to the application availability icon. If it is determined at the block 260 that the "time out" period has not yet been reached, the process 240 returns to the block 250 and the icon continues to be displayed. On the other hand, if it is determined at the block 260 that the "time out" period has been reached, the process 240 ends and no icon pertaining to the synopsis is displayed. The same occurs if the viewer does not desire access at a later time and the "time out" has expired. The process 240 re-executes each time a viewer tunes to a channel for which synopsis data is available in the digital transport stream.

An advantageous feature of an embodiment of the present invention is that the information within the transport stream 200 may cover only the portion of the program from the beginning of the program to a currently presented point of the program. In other words, the entire contents of the synopsis information for the current program need not be broadcast every time, see the data carousel component shown in FIGURE 4. This shortens the latency of starting the application during the early portion of the broadcast, and reduces the memory requirements of the application. As the program progresses, the synopsis information grows in size, slowing the transmission cycle for the data.

The manner in which the synopsis information is displayed is very flexible. For example, the synopsis may be shown as text information overlaid on the presently playing program content. Alternatively, the synopsis may be presented as scrolling text across the bottom of the screen. Also, the video of the real-time program may be shrunken into a comer of the screen, with the synopsis text and/or images displayed on the remainder of the screen. The program audio may be muted and replaced by closed captioning, or reduced in volume, with the synopsis presented as a voice-over audio track. The real-time program may be paused or recorded during the period it takes to view the synopsis information.

In one embodiment, the synopsis information is presented in multiple still image screens, scrolling text, or as continuous audio or video by automatic controls where the presentation of the material is paced according to predetermined application parameters (user or default). In an alternative embodiment, the synopsis information is presented according to manual user control whereby the user controls paging, scrolling, or other means by which the synopsis material is presented. The functions described above may be implemented by activating buttons on a remote control device. The user may exit the presentation of the synopsis information at any time by an appropriate button selection on the remote control or by any type of input command. The user also may be able to select or control the mode of presentation, for example whether to include images in the synopsis.

The synopsis information may include synopsis information about the entire show, thus, permitting the viewer to browse forward in the synopsis information to choose whether to continue viewing the broadcast.

In another embodiment, a synopsis information video starts at certain intervals during the program. If the synopsis information is selected for presentation, the program is interrupted and is replaced by the synopsis information video, which plays until it is complete and then presentation of the program is resumed. In this case, the timing and content of the synopsis video is constructed in such a manner that the end of the synopsis video corresponds to the beginning of the next segment of program not covered in the synopsis video.

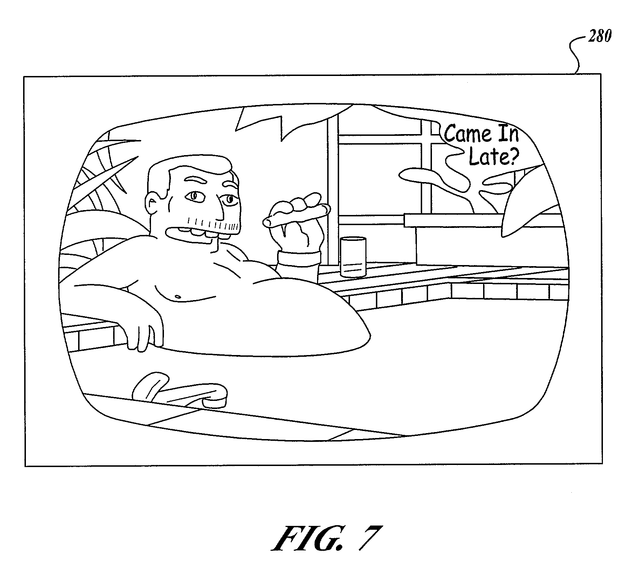

FIGURE 7-9 illustrate an example program that includes synopsis information as generated by the system 30 described above and presented on the user device 34. Referring to FIGURE 7, the user has tuned their device 34 into an episode of a cartoon, but has not started at the beginning of the episode. An icon 280 indicating synopsis information exists is displayed. The icon 280 in this example asks the viewer if they have come in late to the cartoon. The icon 280 is a hyperlink prompt for the viewer indicating that there is or might be available synopsis information regarding the cartoon the user is presently viewing.

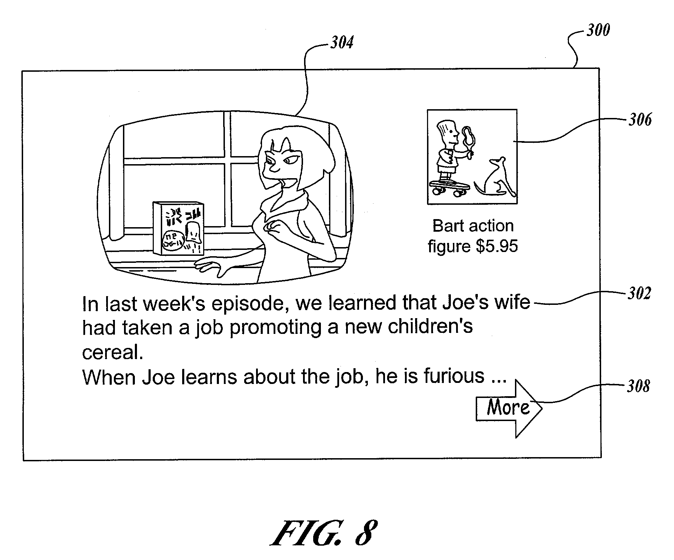

As shown in FIGURE 8, the user has activated the icon 280 shown in FIGURE 7 thus presenting a first page 300 of synopsis information. The user activates the icon 280 or any displayed icon by controlling a screen cursor over the icon 280 and depressing a select key. Cursor control may be performed using a cursor control device, such as a mouse or a remote control device. The select key may be a button on the mouse or a key on the remote control device. Other user interface devices may be used to activate the icon 280. The first page 300 of synopsis information includes a text section 302 that includes a description of the parts of the program that have been missed. The first page 300 also includes an image area 304 that presents still or video images of one or more previous parts of the program or a summary video. The first page 300 optionally includes an advertisement area 306 that includes a hyperlink to an associated product that is displayed within the area 306.

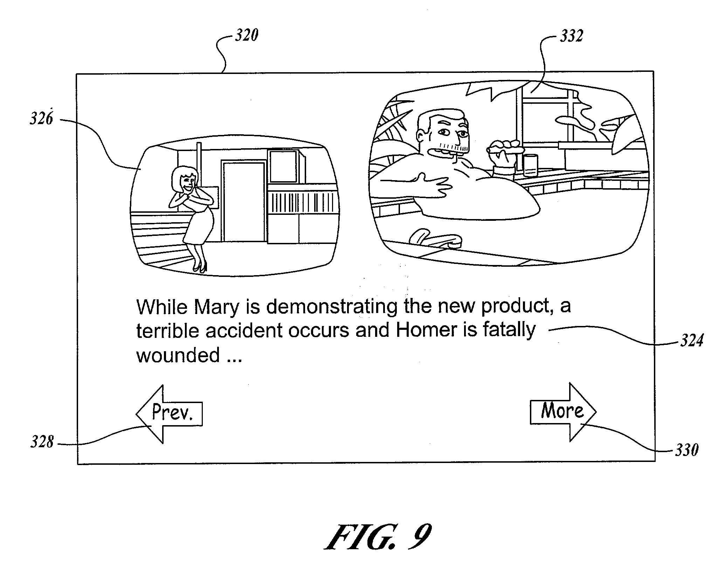

If more synopsis information is included, then the first page 300 includes a more button 308 that when activated presents another display 320 as shown in FIGURE 9. The next page 320 also includes a text synopsis area 324 presented below a synopsis image or video area 326. The next page 320 also includes a button 328 that when activated returns the synopsis to the previously viewed page (page 300). If more synopsis information exists, then a more button 330 is presented. The page 320 may also include a still or video image section 332 that presents a snapshot or video of the presently running program at roughly the point in the program the user selected to view synopsis information. The section 332 may be included in any or all of the synopsis pages.

The amount of synopsis pages that are available to the viewer are determined based on how late the viewer has tuned in to the presented program. In other words, the number of synopsis pages depends upon the amount of synopsis data 208 that is included within the transport stream 200.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. A method comprising:
transmitting a broadcast program over a broadcast network; and
transmitting synopsis information,
wherein the synopsis information includes information associated with a portion of the broadcast program.

2. The method of Claim 1, wherein the synopsis information includes information associated with content of the broadcast program between approximately a starting point of the broadcast program to approximately a point of the broadcast program at the present time of transmission.

3. The method of Claim 1, wherein the transmitted broadcast program is associated with an entire broadcast program, and wherein the synopsis information includes information associated with entire broadcast program.

4. The method of claim 1, wherein the synopsis information includes information associated with a season series associated with the broadcast program.

5. The method of Claim 1, wherein transmitting the synopsis information includes transmitting synopsis information in two or more data packets, wherein a first data packet includes synopsis information associated with a first subportion of the broadcast program and subsequent data packets include synopsis information associated with subsequent subportions of the broadcast program.

6. The method of Claim 1, wherein the synopsis information includes video and audio.

7. The method of Claim 1, wherein the synopsis information includes one or more still images.

8. The method of Claim 1, wherein the synopsis information includes text.

9. The method of Claim 8, wherein the text is scrolling text.

10. An apparatus comprising:
a first component configured to transmit a broadcast program over a broadcast network; and
a second component configured to transmit synopsis information ,
wherein the synopsis information includes information associated with a portion of the broadcast program.

11. The apparatus of Claim 10, wherein the synopsis information includes information associated with content of the broadcast program between approximately a starting point of the broadcast program to approximately a point of the broadcast program at the present time of transmission.

12. The apparatus of Claim 10, wherein the transmitted broadcast program is associated with an entire broadcast program, and wherein the synopsis information includes information associated with entire broadcast program.

13. The apparatus of Claim 10, wherein the synopsis information includes information associated with a season series associated with the broadcast program.

14. The apparatus of Claim 10, wherein the second component transmits synopsis information in two or more data packets, wherein a first data packet includes synopsis information associated with a first subportion of the broadcast program and subsequent data packets include synopsis information associated with subsequent subportions of the broadcast program.

15. The apparatus of Claim 10, wherein the synopsis information includes video and audio.

16. The apparatus of Claim 10, wherein the synopsis information includes one or more still images.

17. The apparatus of Claim 16, wherein the synopsis information includes text.

18. The apparatus of Claim 17, wherein the text is scrolling text.

19. A method comprising:
receiving a broadcast program at a broadcast program recipient device;
receiving synopsis information at the broadcast program recipient device; and
wherein the synopsis information is associated with a portion of the broadcast program.

20. The method of Claim 19, wherein the synopsis information includes information associated with content of the broadcast program between approximately a starting point of the broadcast program to approximately a point of the broadcast program at the time of initial broadcast program reception.

21. The method of Claim 19, wherein the received portion of the broadcast program is associated with an entire broadcast program, and wherein the synopsis information includes information associated with entire broadcast program.

22. The method of Claim 19, wherein the synopsis information includes information associated with a season series associated with the broadcast program.

23. The method of Claim 19, wherein receiving the synopsis information includes receiving synopsis information in two or more data packets, wherein a first data packet includes synopsis information associated with a first subportion of the broadcast program and subsequent data packets include synopsis information associated with subsequent subportions of the broadcast program.

24. The method of Claim 19, further comprising presenting the synopsis information on a display being in data communication with the broadcast program recipient device,

25. The method of Claim 24, wherein the presented synopsis information includes one or more still images.

26. The method of Claim 24, wherein the presented synopsis information includes text.

27. The method of Claim 26, wherein the text is scrolling text.

28. The method of Claim 27, wherein speed of the scrolling text is manually set.

29. The method of Claim 24, wherein the presented synopsis information includes a plurality of pages.

30. The method of Claim 24, further comprising presenting the received broadcast program with the presented synopsis information.

31. An apparatus comprising:
a display device; and
a processor in data communication with the display device, the processor comprising:
a communication component for receiving a broadcast program and associated synopsis information over a broadcast network; and
a display component for presenting at least one of the broadcast program or the synopsis information on the display,
wherein the synopsis information includes information associated with a portion of the broadcast program.

32. The apparatus of Claim 31, wherein the synopsis information includes information associated with content of the broadcast program between approximately a starting point of the broadcast program to approximately a point of the broadcast program at the time of initial broadcast program reception.

33. The apparatus of Claim 31, wherein the received portion of the broadcast program is associated with an entire broadcast program, and wherein the synopsis information includes information associated with entire broadcast program.

34. The apparatus of Claim 31, wherein the synopsis information includes information associated with a season series associated with the broadcast program.

35. The apparatus of Claim 31, wherein the communication component receives synopsis information in two or more data packets, wherein a first data packet includes synopsis information associated with a first subportion of the broadcast program and subsequent data packets include synopsis information associated with subsequent subportions of the broadcast program.

36. The apparatus of Claim 31, wherein the presented synopsis information includes video and audio.

37. The apparatus of Claim 31, wherein the presented synopsis information includes one or more still images.

38. The apparatus of Claim 31, wherein the presented synopsis information includes text.

39. The apparatus of Claim 38, wherein the text is scrolling text.

40. The apparatus of Claim 39, wherein the processor includes a component for generating a user interface for allowing manually setting of speed of the scrolling text.

41. The apparatus of Claim 31, wherein the synopsis information is presented on a plurality of pages.

42. The apparatus of Claim 31, wherein the received broadcast program is presented simultaneously with the presented synopsis information.
